# EUROPÄISCHE PATENTSCHRIFT

(11) **EP 2 487 367 B1**
(45) Veröffentlichungstag und Bekanntmachung des Hinweises auf die Patenterteilung: **17.04.2019**
(21) Anmeldenummer: 12000822.2
(22) Anmeldetag: 09.02.2012
(51) Int. Cl.: F03D 80/00

(54) **Verfahren und Behälter zur Durchführung des Verfahrens zum Ölwechsel in Getrieben und anderen Einrichtungen in Windenergieanlagen (WEA)**
Method and container for performing the method for changing oil in drives and other devices in wind energy assemblies
Procédé et récipient d'exécution du procédé de vidange de l'huile dans des engrenages et autres dispositifs dans des éoliennes

(30) Priorität: 12.02.2011 DE 102011011116; 30.12.2011 DE 102011122688
(43) Veröffentlichungstag der Anmeldung: 15.08.2012
(73) Patentinhaber: Windparkservice GmbH, 17034 Neubrandenburg (DE)
(72) Erfinder: Schleede, Sven, 17094 Pragsdorf (DE); Beyer, Holger, 17509 Hanshagen (DE)

(56) Entgegenhaltungen:
- WO-A1-01/83290
- DE-A1- 10 222 472
- DE-A1-102009 018 045
- DE-A1-102010 009 916

## Beschreibung

Die Erfindung betrifft ein Verfahren zum Ölwechsel in Getrieben und anderen Einrichtungen in Windenergieanlagen (WEA), insbesondere im Offshorebereich. Weiterhin werden Behälter zur Durchführung des Verfahrens vorgeschlagen.

### Stand der Technik

Eine Ölschmierung für aufeinander gleitende oder abwälzende Elemente, wie Zahnräder, Gleitführungen usw. ist überwiegend mit einem Ölvorrat verbunden. Aus diesem wird das Öl im Kreislauf den Schmierbereichen zugeführt und wieder rückgeführt, oder die Teile tauchen direkt in den Ölvorrat. Diese Ölmenge ist relativ groß, da auch Ölverluste ausgeglichen werden sollen, das Öl gekühlt und der Abrieb verdünnt werden soll. Nach einem begrenzten Zeitraum verschlechtern sich die Schmiereigenschaften und das Öl ist auszutauschen. Dafür sind spezielle technische Einrichtungen entwickelt worden.

Ein LKW-Pritschenfahrzeug mit allen auf der Ladefläche montierten erforderlichen Behältern, Pumpanlagen, Schläuchen und Antrieben für Ölwechsel ist durch die Patentschrift JP 57000922 A bekannt. Es ist aber nur je ein Behälter für Frisch- und Altöl vorhanden. Damit kann nur ein Ölwechsel für eine Ölsorte ausgeführt werden. Lange Schläuche für entfernt befindliche Ölmengen sind ebenfalls nicht vorgesehen. Somit ist eine Anordnung aller Anlagen auf einen LKW problemlos möglich.

Durch die DE 1049258B ist auch eine Zapfvorrichtung für Schmieröl in mehreren Sorten bekannt. Je eine Frischölsorte sind eine Förderpumpe und ein Schlauch, abziehbar von einer Schlauchtrommel, zugeordnet. Die Ölzuführung erfolgt dabei über eine Hohlwelle zum Schlauchanschluss, so dass die Schlauchtrommel, bzw. das Gehäuse drehbar ist.

Bei schlecht zugänglichen Orten der zu wechselnden Ölmenge, wie in Getrieben für Windenergieanlagen (WEA), wurde eine spezielle Technik für den Ölaustausch entwickelt. Diese besteht aus einem Tank für Altöl und einer Pumpanlage zum Abpumpen des Altöles. Weiterhin sind mehrere Frischöltanks für die jeweils erforderliche Ölsorte und eine Förderanlage dafür vorhanden. Für den Öltransport zu den teilweise bis 160 m hoch liegenden Getrieben der Windenergieanlagen wird eine Schlauchhaspel mit Drehdurchführung eingesetzt. Jeweils ein Schlauch ist über die Drehdurchführung mit nur einem Ölbehälter verbunden, um eine Ölvermischung zu vermeiden. Mindestens zwei Schläuche, für das Altöl und das Frischöl sind bis zur Höhe des Getriebes hochzuziehen. Dafür werden eine Seilwinde und eine Umlenkrolle im Bereich des Getriebes eingesetzt.

Durch die Anmelderin wurde dafür ein Kraftfahrzeug (Kfz) mit allen erforderlichen Einrichtungen in der DE 102009 018 045 A1 vorgeschlagen. Nachteilig bei dieser Technik sind die Vielzahl der erforderlichen Schläuche und insbesondere die große Schlauchlänge. Bei WEA mit über 50 m Höhe sind diese starken Belastungen ausgesetzt. Weiterhin muss das Kraftfahrzeug mit allen Ausrüstungen für die Vorbereitungszeiten und die Zeitdauer des Ölwechsels an der WEA verbleiben, welches hohe Kosten verursachen.

Bei Offshore-Windenergieanlagen wird anstelle des Kfz ein Schiff oder Schwimmkran eingesetzt. Hier tritt häufig zusätzlich durch den Seegang eine Behinderung auf. Deshalb wurden schon spezielle Schiffskonstruktionen mit ausfahrbaren Stützen oder zum Festmachen am Turmschaft vorgeschlagen (DE 10021163 B4, DE 60101160 T2). Die letztere Variante ist aber derzeit nicht realisierbar, da an der WEA nicht angelegt und in ihrem Bereich auch nicht geankert werden darf.

Durch die DE 60122172 T2 ist es bekannt, am Turmschaft eine senkrechte Kupplungsstange in der Nähe einer Arbeitsplattform oder einem Einstieg anzubringen. An dieser wird das freie Ende eines Laufstegs vom Schiff aus angekuppelt. Das Material und Personal können dann vom Schiff zum Turmschaft geleitet werden. Die Einkupplung an die kleine Kupplungsstange ist aber bei Seegang schwierig. Der Transport über den Laufsteg ist außerdem aufwendig und für große Materialien nicht geeignet.

Eine verbesserte Lösung beschreibt die DE 10222472 A1. Danach ist am Turmschaft eine durchgehende Führungseinrichtung von einem unteren Übergabebereich bis unter die Gondel einer WEA befestigt. An die Führungseinrichtung kann eine Servicekabine, z. B. in Form eines Bootes, im Bereich der Wasseroberfläche angekoppelt werden. In der Servicekabine ist ein Antrieb vorhanden, mit dem diese in die gewünschte Höhe gehoben werden kann. Hier ist eine lange, stationäre Führungseinrichtung an der Turmaußenseite und eine dazu passenden Servicekabine erforderlich.
Allerdings sind nachträgliche bauliche Änderungen an WEA nicht zugelassen. Die Verwendung ist somit auf zugelassene, teure Sonderanfertigungen beschränkt. Weiterhin sind Informationen zum Ölwechsel an diesen WEA nicht enthalten.

Gemäß der DE 10 2010 009 916 A1 wird zum Service an WEA vorgeschlagen, zeitweise am Turm einen Behälter zu befestigen. Das soll erfindungsgemäß mit einer Spanneinheit erfolgen, welche den Turm umfasst und einspannt. An dieser Spanneinheit ist ein Antrieb für die Einspannung und ein Halterahmen für diesen Behälter angeordnet. Die Spanneinheit mit den weiteren Elementen kann mit einem Schiff mit Schiffskran zur WEA transportiert und dann a den Turmschaft herangeführt werden.
Wie bei der Lösung gemäß Absatz 009 ist die Verwendung an WEA mit üblichen Turmschaft nicht zulässig.

Alle bekannten Lösungen zum Anlegen eines Schiffes am Turm der WEA und besondere Führungseinrichtungen an diesem sind schwer realisierbar, da aufwendige Sonderkonstruktionen erforderlich sind. An den derzeit üblichen WEA im Offshorebereich dürfen aus Gründen der Stabilität keine Anbauten vorgenommen werden. Für Ölwechsel wurden derartige Einrichtungen bisher auch nicht genutzt.

Die Tragkraft der Hilfskräne an der Gondel der WEA ist überwiegend gering und nur für den Transport von Ersatzteilen im Rahmen von Wartungsarbeiten ausgelegt. Auch die Anordnung des Kranes in der Gondel ermöglicht häufig die Last nicht unter einem größeren Winkel zum Turm vom Schiff abzuheben.

### Aufgabe der Erfindung

Aufgabe der Erfindung ist es deshalb, ein Verfahren für Ölwechsel in WEA zu schaffen, das für viele Bautypen von WEA, auch für hohe WEA, insbesondere im Offshorebereich geeignet ist. Die bisher ständig erforderliche umfangreiche technische Ausrüstung während des gesamten Ölwechsels bei der WEA soll vermindert und die erforderlichen Schlauchlängen möglichst verkürzt werden. Hierbei sollen nur die allgemein an den WEA vorhandenen Vorrichtungen genutzt und auf zusätzliche Vorrichtungen an den WEA verzichtet werden. Insbesondere die ständige Anwesenheit eines Schiffes bei WEA im Offshorebereich ist zu vermeiden.
Weiterhin sind Behälter zur Durchführung des Verfahrens zu schaffen, in denen die erforderlichen Ausrüstungen für das Verfahren optimal angeordnet sind.
Gelöst wird diese Aufgabe durch die Merkmale des Verfahrens nach Anspruch 1 und durch die Merkmale der Vorrichtung nach Anspruch 8.

Die Erfindung nutzt in der ersten Verfahrensvariante den am oder in der Gondel an den WEA vorhandenen Hilfskran oder eine Plattform an der Gondel für Hubschrauberlasten. Mit diesen Mitteln kann der neu entwickelte autarke Behälter (1) zur Gondel gebracht werden, wobei dieser auf das jeweilige zulässige Gewicht abgeglichen ist. Der autarke Behälter enthält alle technischen Mittel zum Ölwechsel, so dass dieser unabhängig von der Transporteinheit durchgeführt werden kann. Während des Ölwechsels kann die Transporteinheit weitere autarke Behälter (1, 2, 3) zu einer anderen WEA bringen. Hauptvorteil ist im Offshorebereich, dass nur eine kurze Übergabe des autarken Behälters (1) erforderlich ist, bei der das Transportschiff oder der Hubschrauber die Übergabeposition einhalten muss. Anschließend ist der Ölwechsel selbst unproblematisch, da dieser vom autarken Behälter (1) an der Gondel ausgeführt werden kann. Ein weiterer Vorteil ist, dass nur kurze und wenige Schläuche von dem autarken Behälter (1) an der Gondel bis zum Getriebe erforderlich sind.

Gemäß einer zweiten Verfahrensvariante wird die Aufteilung der Ölwechseltechnik auf mindestens 2 Behälter (2, 3) genutzt, die zusammen autark den Ölwechsel vornehmen können. Für die Übersetzung vom Schiff zur Plattform am Turmschaft kann der vorhandenen Hilfskran der Arbeitsplattform oder ein Schiffskran genutzt werden, welche die autarken Behälter (2, 3) tragen können. Die Belastung der Plattform am Turmschaft kann durch die Positionierung der autarken Behälter (2, 3) mit einem größeren Abstand niedrig gehalten werden.
Die autarken Behälter (2, 3) enthalten alle technischen Mittel zum Ölwechsel, einschließlich einer Schlauchhaspel (8) mit langen Schläuchen (11), so dass der Ölwechsel unabhängig von der Transporteinheit durchgeführt werden kann. Während des Ölwechsels kann die Transporteinheit weitere autarke Behälter (1, 2, 3) zu einer anderen WEA bringen.

Gemäß Anspruch 2 ist die Transporteinheit für WEA im Offshorebereich ein Schiff oder Hubschrauber und auf dem Land ein LKW.
Das Verfahren zum Ölwechsel und die autarken Behälter (1, 2, 3) sind somit variabel einsetzbar, entsprechend den jeweiligen Standorten und Bautypen der WEA.

Gemäß Anspruch 3 werden die Anzahl der autarken Behälter (1, 2, 3) und/oder deren Einzelgewicht auf die Tragfähigkeit der jeweiligen Kräne und Plattformen abgestimmt. Damit kann das Verfahren auf die Größe, bzw. Tragfähigkeit der WEA angepasst werden.

Entsprechend einer bevorzugten Ausführung nach Anspruch 4 für Schiffe als Transporteinheit, trägt dieses mindestens einen autarken Behälter (1) und einen Servicecontainer mit Altölbehälter, mehrere transportable Frischöltanks (5), bei Erfordernis ein Spülölbehälter oder eine Spülölaufbereitung, sowie eine Ölwärmvorrichtung. Der Frischöltank (5) mit der erforderlichen Ölsorte wird im Servicecontainer erwärmt und danach in dem autarken Behälter (1) eingesetzt. Aus dem autarken Behälter (1) werden die Schläuche (11), Steuerleitungen mit Bedieneinheit und gegebenenfalls Energieversorgungsleitungen um eine Länge herausgezogen und als Bündel zusammen mit dem autarken Behälter (1) an den Lastträger des Hilfskrans der WEA angehängt und zur Gondel gehoben.
Durch die zusätzliche Nutzung eines Containers für die Lagerung der Ölbehälter, eine Ölwärmvorrichtung für das Frischöl und eine Spülölaufbereitung wird das Verfahren noch variabler und kostengünstiger. Es sind keine Spezialschiffe für den Ölwechsel erforderlich, da alle Einrichtungen hierfür autark arbeiten und transportabel sind.

In einer bevorzugten Ausführung nach Anspruch 5 zum Verfahrensschritt der Rücknahme des autarken Behälters (1) auf das Schiff, wird der leere Frischöltank (5) aus dem autarken Behälter (1) entnommen und in dem Servicecontainer gelagert. Das Altöl und verschmutzte Spülöl aus dem autarken Behälter (1) kann dann in einen leeren Frischöltank (5) im Servicecontainer abgepumpt werden. Anschließend wird der autarke Behälter (1) wieder mit einem Frischöltank (5) beschickt. Wenig genutztes Spülöl kann im Spülöltank (6) verbleiben. Stark verschmutztes Spülöl wird durch filtriertes Spülöl ersetzt. Dieser Verfahrensablauf ermöglicht es, auf einen zusätzlichen großen Altölbehälter und Spülölbehälter auf dem Schiff zu verzichten.

Gemäß einer Variante für die Verwendung eines Hubschraubers als Transporteinheit nach Anspruch 6, wird der autarke Behälter (1) auf Land oder auf dem Schiff vorbereitet. Von dort wird dieser aufgenommen, an die Gondel oder Plattform übergeben und nach dem Ölwechsel dort wieder abgesetzt.
Dieses Verfahren ist schneller als bei der alleinigen Nutzung eines Schiffes bzw. LKWs. Es ist aber nur anwendbar, wenn an/auf der Gondel eine entsprechend Plattform für die Übergabe vorhanden ist.

In einer bevorzugten Ausführung nach Anspruch 7, bei einer Verwendung eines LKWs für eine WEA auf dem Land, wird der autarke Behälter (1) auf diesem vorbereitet oder vorbereitet auf diesen gesetzt. Von dort vom Hilfskran der WEA von der Ladefläche aufgenommen, zur Gondel hochgehoben und nach dem Ölwechsel wieder auf diese abgesetzt.
Mit dieser Variante können einige Vorteile des Verfahrens auch auf Standorten an Land genutzt werden. Das ist insbesondere der Verzicht auf lange Schläuche und entsprechend große Schlauchhaspeln. Weiterhin ist nur ein kleiner LKW erforderlich

In einer bevorzugten Ausführung nach Anspruch 8 mit zwei autarken Behältern (2, 3), enthält ein erster autarker Behälter HC (2) die Versorgungstechnik und ein zweiter autarker Behälter MC (3) die Öltanks. Die autarken Behälter HC, MC (2, 3) werden nebeneinander, übereinander oder gegenüberliegend auf der Plattform der WEA abgesetzt, je nach Tragfähigkeit der Plattform. Die autarken Behälter HC, MC (2, 3) werden anschließend dort zeitweilig befestigt und danach die Ausrüstungen in diesen mittels entsprechend langer Verbindungsleitungen miteinander verbunden. Diese Aufteilung, der Technik in einen autarken Behälter HC (2) und der Tanks (4, 5, 6) im zweiten autarken Behälter MC (3) ermöglicht eine Nutzung auch bei geringer Tragfähigkeit der Plattform am Turmschaft und des Hilfskranes.

Gemäß einer besondere Ausgestaltung des Verfahrens nach Anspruch 9 werden bei der Rücknahme der autarken Behälter HC, MC (2, 3) auf die Transporteinheit die leeren Frischöltanks (5) entnommen und in dem Servicecontainer gelagert. Anschließend wird das Altöl aus dem Altöltank (4) und das verschmutzte Spülöl aus dem Spülöltank (6) des autarken Behälters MC (3) in einen leeren Frischöltank (5) im Servicecontainer abgepumpt. Wenig genutztes Spülöl kann im Spülöltank (6) verbleiben. Stark verschmutztes Spülöl wird durch filtriertes Spülöl ersetzt.
Dieser Verfahrensablauf ermöglicht es, auf einen großen Altöltank und Spülöltank auf dem Schiff zu verzichten.

In Anspruch 10 wird eine günstige Ausgestaltung des autarken Behälters (1) zur Durchführung des Verfahrens vorgeschlagen. Dessen Boden und die Seitenwände sind als Ölauffangwanne ausgebildet. Der Altöltank (4) und Spülöltank (6) sind im unteren Bereich angeordnet und beidseitig nach oben erstreckend, etwa u-förmig ausgebildet. Mittig zwischen den seitlichen Tankenden verbleibt so ein Raum für den Frischöltank (5). Diese Ausbildung sichert eine gleichmäßige Gewichtsverteilung bei unterschiedlichen Ölmengen, eine kompakte Bauweise, ein leichtes austauschen des Frischöltanks und eine Wärmedämmung für das erwärmte Frischöl.

Gemäß einer bevorzugten Ausführung des Behälters nach Anspruch 11 ist der Frischöltank (5) ein standardisierter Behälter mit ca. 1000 Liter Volumen, ein sogenannter Intermediate Bulk Container (IBC). Dieser ist in der U-förmigen Ausnehmung des Altöltanks (4) und Spülöltanks (6) lösbar gelagert. Über diesem ist ein verschließbarer Deckel (14) in der oberen Wandung angeordnet, der eine Beschickung und Entnahme des Frischöltanks (5), der Schläuche (11), Steuerleitungen mit Bedieneinheit und gegebenenfalls Energieversorgungsleitungen, sowie Spülölfilter ermöglicht.
Die Verwendung eines austauschbaren IBC erspart einen speziellen Frischöltank (4) und ein zusätzliches Umpumpen des Frischöls. Weiterhin wird die Bereitstellung von mehreren Frischölsorten vereinfacht.
Für den Ölwechsel ist der Anschluss der Schläuche 11 im autarken Behälter (1) an das Getriebe der WEA erforderlich. Der geöffnete Deckel 14 ermöglicht ein Herausziehen der Schläuche (11) und der Steuerkabel für die Betätigung der Steuerung von der Bedienperson in der Gondel.

Gemäß einer bevorzugten Ausführung des autarken Behälters (1) nach Anspruch 12 sind auf einer Seite neben dem Frischöltank (5), oberhalb des Altöltanks (4), die Schläuche (11) mit Schlauchhaspel (8), die Altölpumpe (9), die Frischölpumpe (10) und ein Feinfilter (17) für das Frischöl angeordnet. Auf der anderen Seite sind die Energieversorgung (12), Steuereinheit (13), Steckdose und Altölablassstutzen (19) angeordnet.
Diese Platzierung sichert eine gleichmäßige Gewichtsverteilung und kurze Anschlusswege für die Öltransporte, Energieversorgung und Steuerung. Weiterhin ist eine gute Zugänglichkeit für die Wartung und Reparatur gegeben.

Nach Anspruch 13 sind an den oberen Ecken des autarken Behälters (1) Krananschläge (16) befestigt. An diese ist je ein Seil angeordnet, die mit den Enden mit einem mittig über dem autarken Behälter (1) liegendem Verbindungselement für ein Vorfach/ Zwischenseil verbunden sind. An dem Vorfach ist das Bündel mit den teilweise herausgezogenen Schläuchen (11), Steuerleitungen mit Bedieneinheit und gegebenenfalls Energieversorgungsleitungen frei aufgehangen und das obere Ende des Vorfaches besitzt eine Aufnahme für den Kranhaken. Diese Ausführung ermöglicht die einfache Handhabung aller Verbindungsleitungen vom Bedienpersonal in der Gondel, nachdem der autarke Behälter (1) bis unter die Gondel gehoben wurde.

In Anspruch 14 wird eine günstige Ausgestaltung bei dem Einsatz von zwei autarken Behältern (2, 3) zur Durchführung des Verfahrens vorgeschlagen. In einem autarken Behälter HC (2) sind eine Schlauchhaspel (8) mit Schläuchen (11), eine Energieversorgung (12), die Steuereinheit (13), transportable Altölpumpe (9), die Frischölpumpe (10) und je ein Feinfilter (17, 18) für das Frischöl und Spülöl angeordnet. Im zweiten autarken Behälter MC (3) sind 2 Frischöltanks (5) nebeneinander und darunter der Altöltank (4) und Spülöltank (6) gelagert. Sie sind durch den Boden und die Seitenwände des autarken Behälters (3) positioniert und wärmegedämmt.
Diese Ausbildung sichert eine gleichmäßige Gewichtsverteilung, eine kompakte Bauweise und kurze Anschlusswege für die Öltransporte, Energieversorgung und Steuerung, sowie ein leichtes austauschen des Frischöltanks und eine Wärmedämmung für das erwärmte Frischöl. Weiterhin ist eine gute Zugänglichkeit für die Wartung und Reparatur gegeben.

Gemäß einer bevorzugten Ausführung der autarken Behälter (1, 2) nach Anspruch 15 ist die Steuereinheit (13) mit einer Funkfernsteuerung und/oder Kabelsteuerung verbunden. Je nach Standort der autarken Behälter (1, 2) und der Bedienperson (Gondel, Plattform am Turmschaft) wird dadurch immer eine einfache Bedienung der Aggregate beim Ölwechsel ermöglicht

### Beispiele

Nachfolgend soll die Erfindung an zwei Ausführungsbeispielen näher erläutert werden.
Beispiel eins mit dem Einsatz eines einzelnen autarken Behälters 1.

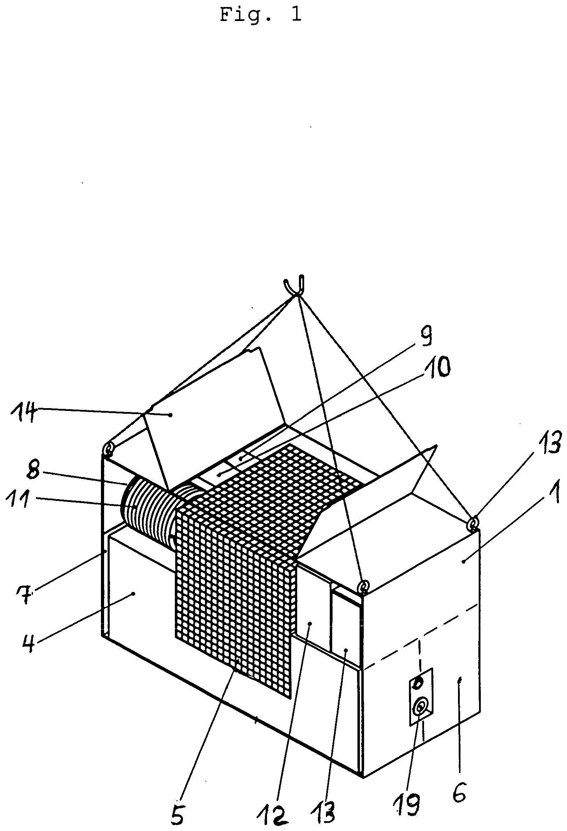

Die Figur 1 zeigt hierzu eine teilweise aufgeschnittene, räumliche Ansicht des autarken Behälters (1).

Die Grundform des autarken Behälters 1 ist kastenförmig, ähnlich einem bekannten Container aus Stahl, um die Vorteile dieser Bauweise zu nutzen. Der Boden und die unteren Seitenwände sind stärker und dicht ausgeführt, so dass eine Ölauffangwanne 7 gebildet wird. In diesem Bereich sind der Altöltank 4 und ein Spülöltank 6 fest angeordnet. An der unteren Seitenwand ist hinter eine Klappe der Altölablassstutzen 19, sowie für Spülöl befestigt. Der Altöltank 4 und Spülöltank 6 besitzen jeweils eine U-förmige Grundform. Zwischen den beiden Schenkeln verbleibt soviel Platz, dass ein Frischöltank 5 darin eingesetzt werden kann. Als Frischöltank 5 wird ein Intermediate Bulk Container (IBC) verwendet. Die Maße sind so gestaltet, dass der IBC leicht von oben einsetzbar, aber auch sicher gehalten wird.

In dem Freiraum links, oberhalb des Altöltanks 4 ist eine Altölpumpe 9 zum Abpumpen des Altöls aus dem Getriebe angeordnet. Diese ist mit dem Schlauch 11 für Altöl auf der Schlauchhaspel 8 und dem Altöltank 4 verbunden. Daneben ist die Frischölpumpe 10 befestigt. Sie ist mit einem zweiten Schlauch 11 für Frischöl und Spülöl auf der Schlauchhaspel 8 und dem Frischöltank 5, bzw. Spülöltank 6 verbunden. An den Pumpen sind jeweils Frischöl- und Spülölfilter vorgeschaltet. Auf der Schlauchhaspel 8 befinden sich somit nur 2 Schläuche 11 von z. B. 10 m Länge.

Die Energieversorgung 12 für die Pumpen (9, 10) und Steuereinheit 13 ist auf der gegenüberliegenden Seite angeordnet und besteht aus einem Motor mit Tank und Generator. Möglich sind auch eine Batterie und/oder eine Anschlusseinheit an das Netz in der Gondel der WEA. Daneben ist die Steuereinheit 13 angeordnet. Diese ist einerseits mit dem Motor, den Pumpen (9, 10) und andererseits mit einer Fernsteuerung per Kabel oder Funk verbunden.

Mittig, oben ist auf dem autarken Behälter 1 ein zweiteiliger Deckel 14 angeordnet. Dieser ist so groß, dass neben dem Frischöltank 5 die Schläuche 11 von der Schlauchhaspel 8 herausgezogen werden können. Auf der anderen Seite ist eine nicht dargestellte Kabeleinheit für die Fernbedienung herausziehbar an die Steuereinheit 13 angeschlossen.

Am autarken Behälter 1 sind oben an den Ecken 4 Krananschläge 16 angeordnet. An diese ist je ein Seil befestigt. Deren Enden sind mittig über dem autarken Behälter 1 in einem Verbindungselement zusammengeführt. Zwischen dem Kranhaken und dem Verbindungselement ist ein nicht dargestelltes Vorfach/Zwischenseil angeschlossen. An diesem werden die um einige Meter herausgezogenen Schläuche 11 und Steuerleitungen mit Bedieneinheit frei hängend befestigt.

Die Abmessungen des autarken Behälters 1 betragen ca. 2,4 m Länge, 1,4 m Breite und 1,8 m Höhe. Das Gesamtgewicht einschließlich eines IBC mit Ölfüllung beträgt ca. 2500 kg. Somit ist der autarke Behälter 1 an vielen WEA im Offshorebereich mit Hilfskran einsetzbar.

Zum Ölwechsel für eine Offshore- WEA mit einem Schiff als Transporter werden auf diesem mehrere autarke Behälter 1 und ein Servicecontainer mit Altölbehälter, mehreren IBC mit Frischöl und eine Ölwärmvorrichtung geladen. Weiterhin ist eine Feinfilteranlage für die Aufbereitung von verschmutztem Spülöl im Servicecontainer angeordnet. Vor Ort, an der WEA, wird ein autarker Behälter 1 mit einem erwärmten IBC aus dem Servicecontainer beschickt. Dann werden an einem Vorfach die um einige Meter herausgezogenen Schläuche 11 und Steuerleitungen mit Bedieneinheit befestigt. Anschließend wird das Vorfach in den Haken des Hilfskranes der WEA eingehangen und der autarke Behälter 1 zur Gondel hochgezogen. In der kurzen Zeit der Übergabe muss das Schiff dicht am Turm der WEA die Position halten. Danach kann es die Position verlassen, bzw. zur nächsten WEA fahren, um dort einen weiteren autarken Behälter 1 zu übergeben.

Befindet sich der autarke Behälter 1 unterhalb der Gondel, wird dieser dort durch zusätzliche Anschläge gegen Pendeln gesichert. Das Personal zieht die eingehangenen Schläuche 11 und Steuerleitungen mit Bedieneinheit in die Gondel und schließt die Schläuche 11 nacheinander an das Getriebe an. Zur Ölspülung ist es günstig auch das Spülöl vorzuwärmen. Dieses kann z. B. durch lfd. Pumpen im Kreislauf (hydraulische Heizen) erfolgen. Nach dem Ölwechsel mit einer Ölspülung mit Spülöl erfolgt der Vorgang in ungekehrter Reihenfolge. An Bord des Schiffes wird das Altöl in einen leeren Frischöltank 5 abgelassen und der IBC ausgetauscht. Stark verschmutztes Spülöl wird in die Feinfilteranlage für die Aufbereitung gepumpt. Gering verschmutztes Spülöl verbleibt im Spülöltank 6. Der autarke Behälter 1 ist dann für einen weiteren Ölwechsel bereit.

Beispiel zwei mit dem Einsatz von zwei autarken Behältern 2, 3.

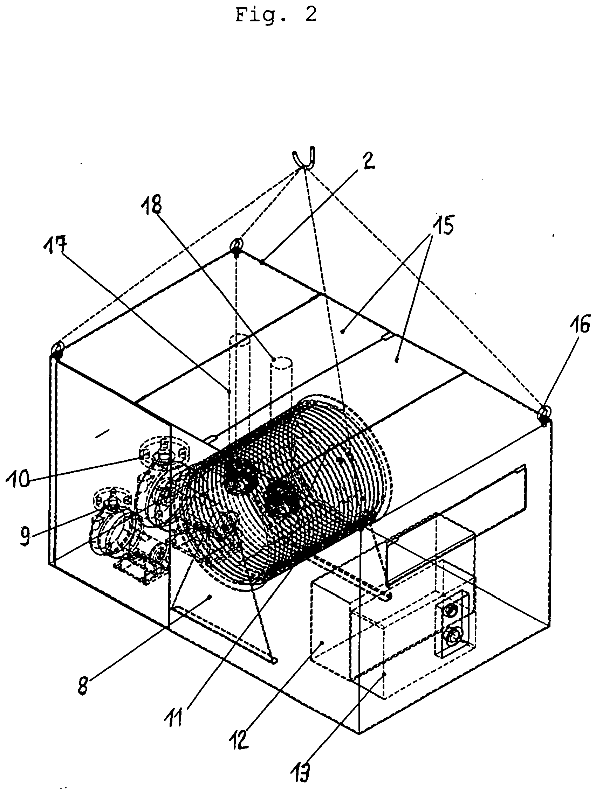

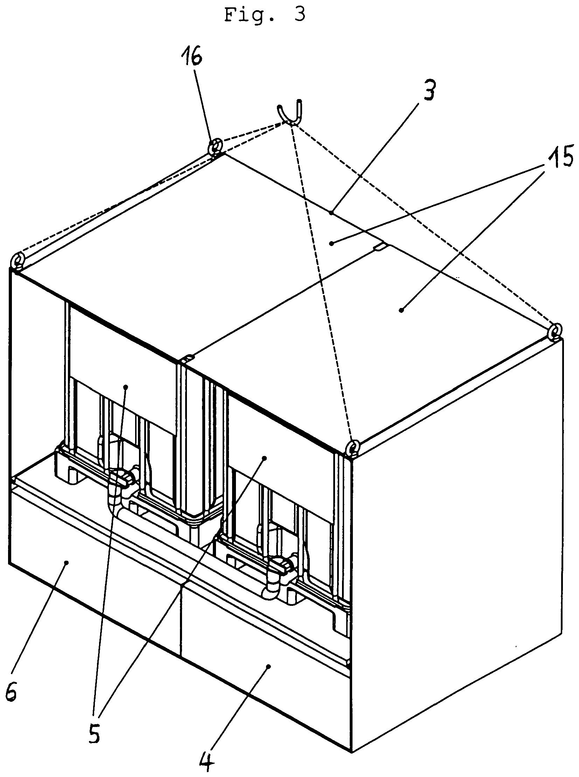

Die Figuren 2 und 3 zeigen hierzu eine teilweise aufgeschnittene, räumliche Ansicht der beiden autarken Behälters 2, 3.

Für das Verfahren zum Ölwechsel in den Offshore WEA stehen auf der Transporteinheit mehrere autarke Behälter 2, 3. Die Grundform der autarken Behälter 2, 3 ist kastenförmig, ähnlich einem bekannten Container aus Stahl, um die Vorteile dieser Bauweise zu nutzen.

In dem autarken Behälter 2 HC (Hydraulikaggregate-Container) ist in dem Freiraum links eine transportable Altölpumpe 9 zum Abpumpen des Altöls und Spülöls aus dem Getriebe angeordnet. Diese wird auf der Gondel mit einem Schlauch 11 für Altöl auf der Schlauchhaspel 8 und dem Altöltank 4 im autarken Behälter 3 MC (Medien-Container) verbunden. Die Frischölpumpe 10 ist fest installiert. Sie ist mit dem 2. Schlauch 11 für Frischöl auf der Schlauchhaspel 8 und den Frischöltanks 5 verbunden. Auf der Schlauchhaspel 8 befinden sich somit nur 2 Schläuche 11 von z. B. 100 m Länge, je nach Turmhöhe. Neben den Pumpen 9, 10 sind die Feinfilter für Frischöl 17 und Spülöl 18 gelagert.

Die Energieversorgung 12 für die Pumpen 9, 10 und Steuereinheit 13 ist auf der gegenüberliegenden Seite angeordnet und besteht aus einem Motor mit Tank und Generator. Möglich sind auch eine Batterie und/oder eine Anschlusseinheit an das Netz der WEA. Daneben ist die Steuereinheit 13 angeordnet. Diese ist einerseits mit dem Schlauchhaspelantrieb, den Pumpen 9, 10 und andererseits mit einer Fernsteuerung per Kabel oder Funk verbunden.

Mittig, oben ist auf dem autarken Behälter 2 HC ein zweiteiliger Deckel 15 angeordnet. Dieser ist so groß, dass die Schlauchhaspel 8 gewartet werden kann. Die Schläuche 11 werden von der Schlauchhaspel 8 durch einen Führungsschlitz in der Seitenwand des autarken Behälters 2 HC geführt. Daneben ist eine nicht dargestellte Kabeleinheit für die Fernbedienung herausziehbar an die Steuereinheit 13 angeschlossen.

Im autarken Behälter 3 MC sind der Boden und die unteren Seitenwände stärker und gedämmt ausgeführt, so diese den Altöltank 4 und Spülöltank 6 aufnehmen und wärmeisolieren können. An der unteren Seitenwand ist hinter eine Klappe der Altölablassstutzen 19 befestigt. Über diesen beiden Tanks sind 2 Frischöltanks 5 gelagert. Als Frischöltank 5 wird je ein Intermediate Bulk Container (IBC) verwendet. Die Maße sind so gestaltet, dass die IBC leicht von oben einsetzbar sind, aber auch sicher gehalten werden.

An den autarken Behältern 2, 3 sind oben an den Ecken 4 Krananschläge 16 angeordnet. An diese ist je ein Seil befestigt. Deren Enden sind mittig über den autarken Behältern 2, 3 in einem Verbindungselement zusammengeführt. Die Abmessungen der autarken Behälters 2, 3 betragen ca. 2,4 m Länge, 1,4 m Breite und 1,8 m Höhe. Das Gesamtgewicht des autarken Behälters 2 MC einschließlich 2 IBC mit Ölfüllung beträgt ca. 2.400 kg.

Zum Ölwechsel für eine Offshore- WEA mit einem Schiff als Transporter werden auf diesem mehrere autarke Behälter 2, 3 und ein Servicecontainer mit Altöltank, mehreren IBC mit Frischöl, eine Ölwärmvorrichtung, sowie eine Feinfilteranlage für die Aufbereitung von verschmutztem Spülöl geladen. Vor Ort, an der WEA, wird ein autarker Behälter 3 MC mit 2 erwärmten IBC aus dem Servicecontainer beschickt.

Dann werden die autarken Behälter 2, 3 nacheinander in den Haken des Hilfskranes der WEA eingehangen und auf die Plattform der WEA abgesetzt und dort gesichert. In der kurzen Zeit der Übergabe muss das Schiff dicht am Turm der WEA die Position halten. Danach kann es die Position verlassen, bzw. zur nächsten WEA fahren, um dort weitere autarke Behälter 2, 3 zu übergeben.

Anschließend werden die beiden autarken Behälter 2, 3 durch Schläuche 11 und Leitungen verbunden. Das Personal zieht die eingehangenen Schläuche 11 mit der Altölpumpe 9 in die Gondel und schließt diese nacheinander an das Getriebe an. Nach dem Abpumpen des Altöls wird Spülöl in das Getriebe gepumpt und mittels der Altölpumpe 9 abgezogen und abschließend Frischöl aufgefüllt. Die Schläuche 11 werden dann eingezogen und die Verbindungen zwischen den autarken Behältern 2, 3 gelöst Nach der Übergabe auf das Schiff wird das Altöl in den Servicecontainer abgelassen, das Spülöl gereinigt und die IBC ausgetauscht. Die autarken Behälter 2, 3 sind dann für einen weiteren Ölwechsel bereit.

### Verzeichnis der Bezugszeichen

- 1: autarker Behälter
- 2: autarker Behälter HC
- 3: autarker Behälter MC
- 4: Altöltank
- 5: Frischöltank
- 6: Spülöltank
- 7: Ölauffangwanne
- 8: Schlauchhaspel
- 9: Altölpumpe
- 10: Frischölpumpe
- 11: Schläuche
- 12: Energieversorgung
- 13: Steuereinheit
- 14: Deckel am aut. Behälter 1
- 15: Deckel an den aut. Behältern 2, 3
- 16: Krananschläge
- 17: Feinfilter Frischöl
- 18: Feinfilter Spülöl
- 19: Altölablassstutzen

## Patentansprüche

1. Verfahren zum Ölwechsel in Getrieben und anderen Einrichtungen in Windenergieanlagen Abk. WEA, insbesondere im Offshorebereich, in dem in einer Transporteinheit z.B. Schiff, LKW, Tanks für Altöl, Spülöl und Frischöl, Pumpen, eine Steuer- und Energieversorgungseinheit .angeordnet sind, die Tanks über Schläuche nacheinander mit der jeweiligen Einrichtung in der WEA verbunden werden, das Altöl abgezogen, bei Bedarf mit Spülöl gespült und danach Frischöl zugeführt wird,
**dadurch gekennzeichnet,**
**dass** die Transporteinheit mindestens einen an sich bekannten autarken Behälter (1), bzw. zwei autarke Behälter(2, 3) trägt, in dem/in denen alle Einrichtungen für einen Ölwechsel einschließlich Schläuche, Steuerung und Energieversorgung angeordnet sind,
wie an sich bekannt, der/die autarke/n Behälter (1, 2, 3) von der Transporteinheit an die WEA übergeben wird/werden, die autarken Behälter (1, 2, 3) dann von der Transporteinheit direkt auf eine Plattform der WEA abgesetzt und gegen Absturz und Pendelbewegungen gesichert und die Ausrüstungen in den Behältern (2, 3) miteinander verbunden werden,
anschließend die Schläuche (11) für Altöl/Spülöl und Frischöl nacheinander mit der jeweiligen Einrichtung der WEA verbunden, bei Erfordernis das Getriebe nach dem Absaugen des Altöls mit Spülöl gespült und das Öl ausgetauscht wird,
danach die Schlauchverbindungen gelöst, eingezogen und der/die autarke/n Behälter (1, 2, 3) bei Anwesenheit der Transporteinheit mit dem Hilfskrane abgesenkt, bzw. von der Plattform an diese übergeben wird/werden.

2. Verfahren nach Anspruch 1, **dadurch gekennzeichnet,**
**dass** bei einer Verwendung eines Schiffes als Transporteinheit, dieses mindestens einen der autarken Behälter (1) und einen Servicecontainer mit Altölbehälter, mehreren transportablen Frischöltanks (5), bei Erfordernis ein Spülölbehälter oder eine Spülölaufbereitung, sowie Ölwärmvorrichtung trägt,
der Frischöltank (5) mit der erforderlichen Ölsorte im Servicecontainer erwärmt und danach in den autarken Behälter (1) eingesetzt wird,
aus dem autarken Behälter (1) die Schläuche (11), Steuerleitungen mit Bedieneinheit und gegebenenfalls Energieversorgungsleitungen um eine Länge herausgezogen werden und als Bündel zusammen mit dem autarken Behälter (1) an den Lastträger des Hilfskrans der WEA angehängt und zur Gondel gehoben werden.

3. Verfahren nach Anspruch 2, **dadurch gekennzeichnet,**
**dass** bei der Rücknahme des autarken Behälters (1) auf das Schiff der leere Frischöltank (5) entnommen und in dem Servicecontainer gelagert wird, das Altöl und verschmutztes Spülöl aus dem autarken Behälter (1) in einen leeren Frischöltank (5) im Servicecontainer abgepumpt und danach der autarke Behälter (1) wieder mit einem Frischöltank (5) beschickt, sowie das Spülöl im Spülöltank (6) belassen oder durch filtriertes Spülöl ersetzt wird.

4. Verfahren nach Anspruch 1, **dadurch gekennzeichnet,**
**dass** bei der Verwendung eines Hubschraubers als Transporteinheit der autarke Behälter (1) auf Land oder auf dem Schiff vorbereitet wird, von dort aufgenommen, an die Gondel oder Plattform übergeben und nach dem Ölwechsel dort wieder abgesetzt wird.

5. Verfahren nach Anspruch 1, **dadurch gekennzeichnet,**
**dass** bei einer Verwendung eines LKWs als Transporteinheit, der autarke Behälter (1) auf diesem vorbereitet oder vorbereitet auf diesen gesetzt wird, von dort vom Hilfskran der WEA von der Ladefläche aufgenommen, zur Gondel hochgehoben und nach dem Ölwechsel wieder auf diese abgesetzt wird.

6. Verfahren nach einem der Ansprüche 1 bis 3, **dadurch gekennzeichnet,**
**dass** ein erster autarker Behälter (2) HC die Versorgungstechnik und ein zweiter autarker Behälter (3) MC die Öltanks enthält,
die autarken Behälter (2, 3) HC, MC nebeneinander, übereinander oder gegenüberliegend auf der Plattform der WEA abgesetzt werden, je nach Tragfähigkeit der Plattform,
die autarken Behälter (2, 3) HC, MC anschließend dort zeitweilig befestigt und danach die Ausrüstungen in diesen mittels entsprechend langer Verbindungsleitungen miteinander verbunden werden.

7. Verfahren nach Anspruch 6, **dadurch gekennzeichnet,**
**dass** bei der Rücknahme der autarken Behälter (2, 3) HC, MC auf die Transporteinheit die leeren Frischöltanks (5) entnommen und in dem Servicecontainer gelagert wird/werden, sowie das Altöl aus dem Altöltank (4) und das verschmutzte Spülöl aus dem Spülöltank (6) des autarken Behälters (3) MC in einen leeren Frischöltank (5) im Servicecontainer abgepumpt, bzw. das Spülöl durch Filtration wieder aufbereitet wird.

8. Autarker Behälter (1) zur Durchführung des Verfahrens nach einem der Ansprüche 1 bis 7, **dadurch gekennzeichnet,**
**dass** dessen Boden und die Seitenwände als Ölauffangwanne ausgebildet sind, der Altöltank (4) und Spülöltank (6) im unteren Bereich angeordnet und beidseitig nach oben erstreckend, etwa u-förmig, ausgebildet sind,
so dass mittig zwischen den seitlichen Tankenden ein Raum für den Frischöltank (5) verbleibt.

9. Autarker Behälter (1) nach Anspruch 8, **dadurch gekennzeichnet,**
**dass** der Frischöltank (5) ein standardisierter Behälter mit ca. 1000 Liter Volumen, ein sogenannter Intermediate Bulk Container Abk. IBC ist, der in der U-förmigen Ausnehmung des Altöltanks (4) und Spülöltanks (6) lösbar gelagert ist und über diesen ein verschließbarer Deckel (14) in der oberen Wandung angeordnet ist, der eine Beschickung und Entnahme des Frischöltanks (5), der Schläuche (11), Steuerleitungen mit Bedieneinheit und gegebenenfalls Energieversorgungsleitungen, sowie Spülölfilter ermöglicht.

10. Autarker Behälter (1) nach Anspruch 8 oder 9, **dadurch gekennzeichnet,**
**dass** auf einer Seite neben dem Frischöltank (5), oberhalb des Altöltanks (4), die Schläuche (11), die Altölpumpe (9), die Frischölpumpe (10) und ein Feinfilter (17) für das Frischöl, auf der anderen Seite, die Energieversorgung (12), Steuereinheit (13) Steckdose und Altölablassstutzen (19) angeordnet sind.

11. Autarker Behälter (1) nach einem der Ansprüche 8 bis 10, **dadurch gekennzeichnet,**
**dass** an diesem an den oberen Ecken Krananschläge (13) befestigt sind, an die je ein Seil angeordnet ist, die mit den Enden mit einem mittig über dem autarken Behälter (1) liegendem Verbindungselement für ein Vorfach/ Zwischenseil verbunden sind,
an dem Vorfach das Bündel mit den teilweise herausgezogenen Schläuchen (11), Steuerleitungen mit Bedieneinheit und gegebenenfalls Energieversorgungsleitungen frei aufgehangen sind und das obere Ende des Vorfaches eine Aufnahme für den Kranhaken besitzt.

12. Autarke Behälter (2, 3)zur Durchführung des Verfahrens nach einem der Ansprüche 1 bis 3, sowie 6 und 7, **dadurch gekennzeichnet,**
**dass** in einem autarken Behälter (2) HC, eine Haspel (8) mit Schläuchen (11), eine Energieversorgung (12), die Steuereinheit (13), transportable Altölpumpe (9), die Frischölpumpe (10) und je ein Feinfilter (17, 18) für das Frischöl und Spülöl angeordnet sind,
**dass** im zweiten autarken Behälter (3) MC 2 Frischöltanks (5) nebeneinander und darunter der Altöltank (4) und Spülöltank (6) gelagert ist, die durch den Boden und die Seitenwände des autarken Behälters (3) positioniert und wärmegedämmt sind.

## Claims

1. A method for changing oil in drives and other devices in wind energy assemblies (abbreviated to WEA), in particular for the offshore industry, in which tanks for waste oil, flushing oil and fresh oil, pumps, a control unit and an energy supply unit are arranged in a transport unit, e.g. a ship, truck, the tanks are connected in succession to the respective device in the WEA by means of hoses, the waste oil is drawn off, flushed with flushing oil if necessary and fresh oil is then supplied, **characterised in that**
the transport unit supports at least one stand-alone container (1), which is known per se, or two stand-alone containers (2, 3), in which all of the devices for an oil change including hoses, control system and energy supply are arranged,
as is known per se, the stand-alone container (s) (1, 2, 3) is/are delivered by the transport unit to the WEA, the stand-alone container(s) (1, 2, 3) is/are then deposited by the transport unit directly onto a platform of the WEA and secured against falling and pendular movements and the pieces of equipment in the containers (2, 3) are connected to one another,
the hoses (11) for waste oil/flushing oil and fresh oil are subsequently connected in succession to the respective device of the WEA, if required the drive is flushed with flushing oil after the waste oil has been sucked off and the oil is exchanged,
the hose connections are then loosened, retracted and the stand-alone container(s) (1, 2, 3) is/are lowered with the auxiliary crane in the presence of the transport unit, or respectively is/are delivered from the platform to said transport unit.

2. The method according to Claim 1, **characterised in that** when a ship is used as the transport unit, said ship carries at least one of the stand-alone containers (1) and a service container having a waste oil container, multiple transportable fresh oil tanks (5), if required a flushing oil container or a flushing oil preparation, as well as an oil warming apparatus, the fresh oil tank (5) with the required oil grade is heated in the service container and is then introduced into the stand-alone container (1),
a length of the hoses (11), control lines with operating unit and, if applicable, energy supply lines is extracted from the stand-alone container (1) and attached, as a bundle, together with the stand-alone container (1), to the load carrier of the auxiliary crane of the WEA and lifted up to the gondola.

3. The method according to Claim 2, **characterised in that** when the stand-alone container (1) is returned to the ship, the empty fresh oil tank (5) is removed and mounted in the service container, the waste oil and contaminated flushing oil are pumped out from the stand-alone container (1) into an empty fresh oil tank (5) in the service container and the stand-alone container (1) is then charged again with a fresh oil tank (5), and the flushing oil is left in the flushing oil tank (6) or replaced by filtered flushing oil.

4. The method according to Claim 1, **characterised in that** when a helicopter is used as the transport unit, the stand-alone container (1) is prepared on land or on the ship, received from there, delivered to the gondola or platform, and then deposited there again following the oil change.

5. The method according to Claim 1, **characterised in that** when a truck is used as the transport unit, the stand-alone container (1) is prepared on this or placed on this in a prepared manner, received from there by the auxiliary crane of the WEA from the loading area, lifted up to the gondola, and then deposited back on said loading area following the oil change.

6. The method according to any one of Claims 1 to 3, **characterised in that**
a first stand-alone container (2) HC contains the supply technology and a second stand-alone container (3) MC contains the oil tanks,
the stand-alone containers (2, 3) HC, MC are deposited next to one another, above one another or opposite one another on the platform of the WEA, depending on the load capacity of the platform,
the stand-alone containers (2, 3) HC, MC are subsequently fastened there temporarily and the pieces of equipment are then connected to one another in these by means of correspondingly long connecting lines.

7. The method according to Claim 6, **characterised in that** when the stand-alone containers (2, 3) HC, MC are returned to the transport unit, the empty fresh oil tanks (5) are removed and mounted in the service container, and the waste oil is pumped out of the waste oil tank (4) and the contaminated flushing oil is pumped out of the flushing oil tank (6) of the stand-alone container (3) MC into an empty fresh oil tank (5) in the service container, or the flushing oil is treated again by filtration.

8. A stand-alone container (1) for performing the method according to any one of Claims 1 to 7, **characterised in that** the bottom thereof and the side walls are configured as an oil collecting vat, the waste oil tank (4) and flushing oil tank (6) are arranged in the lower region and are configured, extending upwards on both sides, in approximately a U-shape, such that a space remains for the fresh oil tank (5) centrally between the lateral tank ends.

9. The stand-alone container (1) according to Claim 8, **characterised in that**
the fresh oil tank (5) is a standardised container having a volume of approx. 1000 litres, a so-called intermediate bulk container, abbreviated to IBC, which is detachably mounted in the U-shaped recess of the waste oil tank (4) and flushing oil tank (6), and a lockable lid (14) is arranged in the upper wall above these, which lockable lid makes it possible to charge and remove the fresh oil tank (5), the hoses (11), control lines with operating unit and, if applicable, energy supply lines, as well as flushing oil filters.

10. The stand-alone container (1) according to Claim 8 or 9, **characterised in that**
the hoses (11), the waste oil pump (9), the fresh oil pump (10) and a fine mesh filter (17) for the fresh oil are arranged on one side adjacent to the fresh oil tank (5), above the waste oil tank (4), while the energy supply (12), control unit (13) outlet and waste oil drain plug (19) are arranged on the other side.

11. The stand-alone container (1) according to any one of Claims 8 to 10, **characterised in that**
crane stops (13) are fastened to said stand-alone container at the upper corners, on which one cable each is arranged, which are connected with the ends to a connection element located centrally above the stand-alone container (1) for a leader/intermediate cable,
the bundle having the partially extracted hoses (11), control lines with operating unit and, if applicable, energy supply lines are freely suspended from the leader, and the upper end of the leader has a receptacle for the crane hook.

12. A stand-alone container (2, 3) for performing the method according to any one of Claims 1 to 3, as well as 6 and 7, **characterised in that**
a winch (8) with hoses (11), an energy supply (12), the control unit (13), transportable waste oil pump (9), the fresh oil pump (10) and one fine mesh filter (17, 18) each for the fresh oil and flushing oil are arranged in a stand-alone container (2) HC,
fresh oil tanks (5) are mounted next to one another and, thereunder, the waste oil tank (4) and flushing oil tank (6) in the second stand-alone container (3) MC 2, which tanks are positioned and heat insulated by the bottom and side walls of the stand-alone container (3).

## Revendications

1. Procédé de vidange d'huile dans des engrenages et autres dispositifs d'installations éoliennes (en abrégé : IE), en particulier en mer, où dans une unité de transport, telle que bateau, véhicule poids lourd, sont disposés des réservoirs pour huile usée, huile de rinçage et huile neuve, des pompes, une unité de commande et d'alimentation en puissance, les réservoirs sont successivement raccordés au dispositif correspondant de l'IE par des tuyaux, l'huile usée est pompée, si nécessaire rincée avec de l'huile de rinçage puis de l'huile neuve est amenée,
**caractérisé**
**en ce que** l'unité de transport supporte au moins un conteneur autosuffisant (1) connu en soi, ou deux conteneurs autosuffisants (2, 3), où sont présentés tous les dispositifs pour une vidange d'huile, y compris les tuyaux, la commande et l'alimentation en puissance,
comme connu en soi, le ou les conteneurs autosuffisants (1, 2, 3) sont transférés de l'unité de transport à l'IE, les conteneurs autosuffisants (1, 2, 3) sont ensuite déposés directement de l'unité de transport sur une plate-forme de l'IE et protégés contre une chute et des mouvements oscillatoires, et les équipements des conteneurs (2, 3) sont raccordés entre eux,
les tuyaux (11) pour l'huile usée/l'huile de rinçage et l'huile neuve sont ensuite raccordés aux dispositifs correspondants de l'IE, si nécessaire l'engrenage est rincé avec de l'huile de rinçage après pompe de l'huile usée et l'huile est changée,
les raccords de tuyaux sont ensuite desserrés, rentrés et le ou les conteneurs autosuffisants (1, 2, 3) sont descendus par les grues auxiliaires en présence de l'unité de transport, ou transférés de la plate-forme à celle-ci.

2. Procédé selon la revendication 1, **caractérisé**
**en ce qu'**en cas d'utilisation d'un bateau comme unité de transport, celui-ci supporte au moins un des conteneurs autosuffisants (1) et un conteneur de service avec un conteneur d'huile usée, plusieurs réservoirs d'huile neuve (5) transportables, si nécessaire un conteneur d'huile de rinçage ou un préparation d'huile de rinçage ainsi qu'un système de chauffage d'huile,
le réservoir d'huile neuve (5) est chauffé dans le conteneur de service avec le type d'huile exigé avant d'être mis en place dans le conteneur autosuffisant (1),
les tuyaux (11), des conduites de commande avec l'unité de commande et éventuellement des conduites d'alimentation en puissance sont sortis sur une certaine longueur du conteneur autosuffisant (1) et accrochés en faisceau avec le conteneur autosuffisant (1) sur le support de charge de la grue auxiliaire de l'IE, et hissés vers la nacelle.

3. Procédé selon la revendication 2, **caractérisé**
**en ce qu'**en cas de reprise du conteneur autosuffisant (1) sur le bateau, le réservoir d'huile neuve (5) vide est retirée et positionnée dans le conteneur de service, l'huile usée et l'huile de rinçage encrassée sont pompées du conteneur autosuffisant (1) vers un réservoir d'huile neuve (5) vide dans le conteneur de service, et le conteneur autosuffisant (1) est ensuite rééquipé d'un réservoir d'huile neuve (5), et l'huile de rinçage est laissée dans le réservoir d'huile de rinçage (6) ou remplacée par de l'huile de rinçage filtrée.

4. Procédé selon la revendication 1, **caractérisé**
**en ce qu'**en cas d'utilisation d'un hélicoptère comme unité de transport, le conteneur autosuffisant (1) est préparé sur terre ou sur le bateau, pris et transféré de là vers la nacelle ou plate-forme et y est redéposé après la vidange d'huile.

5. Procédé selon la revendication 1, **caractérisé en ce qu'**en cas d'utilisation d'un véhicule poids lourd comme unité de transport, le conteneur autosuffisant (1) est préparé sur celui-ci ou déposé celui-ci en état préparé, y est saisi de la surface de chargement par la grue auxiliaire de l'IE, est hissé vers la nacelle et y est redéposé après la vidange d'huile.

6. Procédé selon l'une quelconque des revendications 1 à 3, **caractérisé**
**en ce qu'**un premier conteneur autosuffisant (2) HC contient la technique d'alimentation et un deuxième conteneur autosuffisant (3) MC contient les réservoirs d'huile,
les conteneurs autosuffisants (2, 3) HC, MC sont déposés l'un à côté de l'autre, l'un sur l'autre ou en vis-à-vis sur la plate-forme de l'IE, en fonction de la portance de la plate-forme,
les conteneurs autosuffisants (2, 3) HC, MC y sont ensuite temporairement fixés avant que les équipements soient raccordés entre eux dans ceux-ci au moyen de conduites de connexion de longueur correspondante.

7. Procédé selon la revendication 6, caractérisé
en ce lors de la reprise des conteneurs autosuffisants (2, 3) HC, MC vers l'unité de transport les réservoirs d'huile neuve (5) sont retirés et stockés dans le conteneur de service, et l'huile usée du réservoir d'huile usée (4) et l'huile de rinçage encrassée du réservoir d'huile de rinçage (6) du conteneur autosuffisant (3) MC est pompée vers un réservoir d'huile neuve (5) vide dans le conteneur de service, ou l'huile de rinçage est reconditionnée par filtration.

8. Récipient autosuffisant (1) pour l'exécution du procédé selon l'une quelconque des revendications 1 à 7, **caractérisé en ce que** le fond de celui-ci et les parois latérales sont formés comme carter de récupération d'huile, le réservoir d'huile usée (4) et le réservoir d'huile de rinçage (6) sont disposés dans la partie inférieure et sont conçus de manière à s'étendre vers le haut des deux côtés, sensiblement en forme de U,
si bien qu'un espace pour le réservoir d'huile neuve (5) reste ménagé entre les extrémités latérales des réservoirs.

9. Récipient autosuffisant (1) selon la revendication 8, **caractérisé**
**en ce que** le réservoir d'huile neuve (5) est un conteneur normalisé de capacité d'environ 1000 litres, un grand récipient pour vrac dit Intermediate Bulk Container, en abrégé IBC, qui est logé de manière amovible dans la cavité en forme de U du réservoir d'huile usée (4) et du réservoir d'huile de rinçage (6), et en ce qu'un couvercle (14) verrouillable st disposé au-dessus de celui-ci dans la paroi supérieure, lequel permet un chargement et un retrait du réservoir d'huile neuve (5), des tuyaux (11), des conduites de commande avec l'unité de commande et éventuellement des conduites d'alimentation en puissance, ainsi que du filtre d'huile de rinçage.

10. Récipient autosuffisant (1) selon la revendication 8 ou la revendication 9, **caractérisé**
**en ce que** sont disposés d'un côté, à côté du réservoir d'huile neuve (5), au-dessus du réservoir d'huile usée (4), les tuyaux (11), la pompe à huile usée (9), la pompe à huile neuve (10) et un filtre fin (17) pour l'huile neuve, et de l'autre côté, l'alimentation en puissance (12), l'unité de commande (13), la prise électrique et la tubulure de vidange d'huile usée (19).

11. Récipient autosuffisant (1) selon l'une quelconque des revendications 8 à 10, **caractérisé**
**en ce que** des éléments d'accrochage (13) sont fixés contre celui-ci dans les coins supérieurs, sur chacun desquels est passé un câble, et sont reliés à leur extrémité à un élément de connexion disposé centralement au-dessus du conteneur autosuffisant (1) pour un bas de câble / câble intermédiaire, le faisceau avec les tuyaux (11) partiellement tirés, les conduites de commande avec l'unité de commande et éventuellement des conduites d'alimentation en puissance sont librement accrochés au bas de câble et l'extrémité supérieure du bas de câble est pourvue d'une réception pour le crochet de grue.

12. Récipients autosuffisants (2, 3) pour l'exécution du procédé selon l'une quelconque des revendications 1 à 3, ainsi que 6 et 7, **caractérisés**
**en ce que** dans un conteneur autosuffisant (2) HC, sont disposés une bobine (8) avec des tuyaux (11), une alimentation en puissance (12), l'unité de commande (13), une pompe à huile usée (9) transportable, la pompe à huile neuve (10) et un filtre fin (17, 18) pour l'huile neuve et un autre pour l'huile de rinçage,
**en ce que** dans le deuxième conteneur autosuffisant (3) MC 2 sont disposés côte à côte réservoirs d'huile neuve (5) et en dessous de ceux-ci le réservoir d'huile usée (4) et le réservoir d'huile de rinçage (6), lesquels sont positionnés et isolés thermiquement par le fond et les parois latérales du conteneur autosuffisant (3).
